# EUROPÄISCHE PATENTSCHRIFT

(11) **EP 2 472 163 B1**
(45) Veröffentlichungstag und Bekanntmachung des Hinweises auf die Patenterteilung: **21.08.2013**
(21) Anmeldenummer: 10197160.4
(22) Anmeldetag: 28.12.2010
(51) Int. Cl.: F16L 55/11, F16B 13/06, F15B 13/08

(54) **Hydraulische Vorrichtung**
Hydraulic device
Dispositif hydraulique

(43) Veröffentlichungstag der Anmeldung: 04.07.2012
(73) Patentinhaber: HAWE Hydraulik SE, 81673 München (DE)
(72) Erfinder: Zwingler, Engelbert, 85625 Baiern/Antholing (DE); Faber, Bernd, 83026 Rosenheim (DE)
(74) Vertreter: Grünecker, Kinkeldey, Stockmair & Schwanhäusser

(56) Entgegenhaltungen:
- EP-A1- 1 972 867
- EP-A1- 2 402 637
- DE-U1- 9 004 456
- US-A- 6 062 263

## Beschreibung

Die Erfindung betrifft eine hydraulische Vorrichtung der im Oberbegriff des Patentanspruchs 1 angegebenen Art.

Solche Vorrichtungen sind beispielsweise Gehäuse von Schieber- oder Sitzventilen oder Hydraulikverbrauchern, wie Zylindern, Pumpen oder Motoren, wobei über den Kanal in dem Gehäuse vorgesehene Strömungswege oder Hohlräume beispielsweise für Ventilelemente oder Ventilschieber anzuzapfen und/oder mit anderen Strömungswegen zu verbinden sind. Der Kanal ist im Regelfall von zumindest einer Gehäuseaußenseite als Bohrung, vorzugsweise Stufenbohrung, eingebracht und muss, da er eine Strömungsleitfunktion hat, an seiner außenliegenden Mündung und/oder innerhalb seines Verlaufes druckdicht abgesperrt werden. Für diesen Zweck sind in der Technik solcher hydraulischen Vorrichtungen Verschluss-Stopfen bekannt, die meist dauerhaft montiert werden. Ein bekannter Stopfen ist eine Stahlkugel, die in den Kanal eingepresst und von der Zugangsseite her umfänglich verstemmt wird. Ein anderer bekannter Stopfen ist ein Königsexpander, der aus einer mittels eines Kegels verspreizten Kugel besteht und eingepresst und expandiert wird. Ein Nachteil der bekannten Stopfen liegt darin, dass in Durchmesserrichtung hinter dem Stopfen für ein Werkzeug erheblicher Raum benötigt wird, und dass die beim Montieren des Stopfens aufzubringenden Kräfte in diesem Bereich sehr hoch sind und gegebenenfalls im Gehäuse zu unerwünschten Spannungen und/oder sogar Deformationen führen. Für eine Kugel oder einem Königsexpander mit einem Außendurchmesser von 6,0 mm wird beispielsweise ein Außendurchmesser von mindestens 8,0 mm für das Werkzeug benötigt, so dass ein Kanal mit drei Stopfen mit Durchmessern von 6,0 mm, 8,0 mm und 11,0 mm an der Mündung einen Durchmesser von mindestens 14,0 mm braucht, obwohl für die Strömungsleitfunktion eigentlich nur ein Durchmesser von 6,0 mm reichte. Dieser Nachteil ist gegebenenfalls weniger kritisch, wenn ein Stopfen in der Kanalmündung sitzt. Wird oder werden jedoch innerhalb der Erstreckung des Kanals ein weiterer oder mehrere Stopfen montiert, dann addieren sich die Durchmessersprünge in Richtung zur Mündung, die unzweckmäßig weit wird, was dem allgemeinen Bestreben nach möglichst kompakten Gehäusen entgegensteht, die neben dem Kanal in der Gehäuseseite gegebenenfalls viele weitere Anschlüsse und/oder Montierbereiche aufweisen. Auch können die durch die hohen Montier-Kräfte für jeden Stopfen erzeugten Spannungen oder Verformungen die Funktion beispielsweise in Hohlräumen des Gehäuses angeordneter beweglicher Komponenten, wie Schieber oder dgl., erschweren, beispielsweise so dass ein Schieber oder Stößel nicht mehr sauber läuft.

In EP 2 402 637 A1 (Stand der Technik nach Artikel 54(3) EPÜ) wird vorgeschlagen, bei einer in Fig. 1 gezeigten hydraulischen Vorrichtung in Form eines Blocks eines Strömungs-Moduls einen von außen zu einem innenliegenden Strömungsweg geformtem Kanal durch einen Stopfen zu verschließen. Der Kanal weist an seiner Mündung einen Innengewindeabschnitt auf, an den sich koaxial über eine Schulter eine zylindrische Kanal-Passfläche anschließt, die bis zu einer zum Strömungsweg offenen, konischen Verjüngung im Kanal führt. Der Stopfen weist einen in Montierlage des Stopfens über die Außenseite des Blocks überstehenden Schraubkopf und einen Außengewindeabschnitt auf, an den sich über eine Schulter ein koaxialer Schaft mit einer zylindrischen Stopfen-Passfläche anschließt, die sich bis zu einer am konischen Schaftende geformten Umfangsnut erstreckt. In der Umfangsnut ist ein Dichtring enthalten, der unter der Anzugsspannung des in den Kanal eingeschraubten Stopfens an der konischen Verjüngung im Kanal abdichtet, wobei die Schulter des Außengewindeabschnitts des Stopfens gegen die Schulter im Kanal auf Anschlag angezogen wird. Der Anschlag sichert zusammen mit der Reibung zwischen dem Dichtring und der Verjüngung den Stopfen gegen Verdrehen im Kanal. Der gegen die Verjüngung angepresste Dichtring dichtet einen Spalt zwischen dem Stopfen und dem Kanal gegenüber dem innenliegenden Strömungsweg im Strömungs-Modul ab.

Aus US 6 062 263 A ist es bekannt, zur Abdichtung eines mit Hydraulikmedium beaufschlagbaren Kanals einen Stopfen mit einem selbstschneidenden Außengewinde und zusammenwirkenden Passflächen am Stopfen und im Kanal zu erzeugen, wobei die Abdichtwirkung durch Kaltverformung zwischen den Passflächen entsteht und der Stopfen durch den Gewindeeingriff verdrehgesichert wird. Da die Passfläche im Kanal kaltverformt wird, muss der Stopfen aus festerem und/oder hochwertigerem metallischem Material bestehen als das Gehäuse, wodurch der Gewindeeingriff im weicheren Metallmaterial des Gehäuses gefährdet ist. Dieses Dokument offenbart den Oberbegriff des Anspruchs 1.

Bei dem aus DE 90 04 456 U1 bekannten Gewindestutzen für ein Rohrleitungsende wirkt eine konische Dichtfläche am Stopfen mit einem im Kanal geformten konischen Sitz unter Kaltverformung zusammen. Für Hydraulikeinrichtungen mit Drücken bis zu etwa 500 bar sind die Dichtwirkung und die Verdrehsicherung des Gewindestutzens nicht ausreichend zuverlässig.

Ein mit einer konischen Dichtfläche am Einschraubende ausgestatteter Stopfen gemäß EP 1 972 867 A wird mit seinem Außengewindeabschnitt in einen Innengewindeabschnitt einer Bohrung eingeschraubt. Die konische Dichtfläche des Stopfens wirkt mit einer rechtwinkligen Kante der Mündung einer Bohrung zusammen, welche Mündung als Sitz dient, welcher vom Stopfen abgesperrt wird. Zusätzlich ist ein O-Ring vorgesehen, der mit der zylindrischen Bohrungswand nach außen abdichtend zusammenarbeitet. Eine metallische Abdichtung wird über Kaltverformung zwischen der konischen Dichtfläche und der rechteckigen Kante erzeugt.

Der Erfindung liegt die Aufgabe zugrunde, eine hydraulische Vorrichtung der eingangs genannten Art anzugeben, bei der die bisher mit Stopfen in Kauf zu nehmenden Nachteile vermieden oder minimiert sind.

Die gestellte Aufgabe wird mit den Merkmalen des Patentanspruchs 1 gelöst.

Da der in den Kanal eingeschraubte Stopfen durch den Einschraubvorgang mit seiner zylindrischen Stopfen-Passfläche mit den zylindrischen Kanal-Passflächen in einen umfänglichen Presssitz gebracht wird, der den Stopfen zumindest gegen Verdrehen festlegt, braucht im Kanal mit keinem Werkzeug angegriffen zu werden, um den Stopfen zu fixieren und abzudichten. Der Presssitz zwischen den Passflächen verhindert, dass sich der Stopfen bei Druckstößen im Kanal in der einen und/oder anderen Richtung, und/oder unter betriebsbedingten Vibrationen und/oder thermischen Einflüssen lockert. Ferner kann der Presssitz die druckdichte Absperrung des Kanals sicherstellen, entweder ohne weitere Hilfsmaßnahmen, oder unterstützt durch eine Dichtung. Als flankierender Vorteil bleibt die Möglichkeit, einen montierten Stopfen ohne Beschädigung des Gehäuses demontieren zu können. Da zur Montage des Stopfens nicht mechanisch in das Gehäuse oder die Kanalwand eingegriffen zu werden braucht, wird hinter dem Stopfen kein vergrößerter Durchmesser im Kanal benötigt, wodurch Bauraum eingespart werden kann. Außerdem entstehen durch die Montage des Stopfens keine nennenswerten Spannungen oder Deformationen im Gehäuse. Der Presssitz wird zwischen zumindest im Wesentlichen zylindrischen Passflächen am Stopfen und im Kanal über die Anzugsspannung des eingeschraubten Stopfens gebildet. Durch entsprechende Dimensionierung der Passflächen und der Oberflächenqualitäten der Passflächen (Presspassung) lässt sich die Verdrehsicherung und/oder Absperrwirkung relativ präzise vorher bestimmen, so dass der Stopfen Arbeitsdrücke von bis zu 700 oder 800 bar ohne Leckage oder Ausreißen verträgt. Die Stopfen-Passfläche ist in Achsrichtung des Stopfens in etwa so lang wie oder sogar etwas länger als der Außengewindeabschnitt, um eine möglichst große Dichtzone zu bilden und die Schraubverbindung mit großer Kraft festzulegen. Die jeweils wenigstens eine Stopfen-Passfläche ist z. B. in Einschraubrichtung des Stopfens von der Mündung des Kanals an der der Mündung abgewandten Seite des Außengewindeabschnitts angeordnet, so dass der Außengewindeabschnitt die Stopfen-Passfläche vor sich her in die Kanal-Passfläche treibt, bis der Passsitz hergestellt ist. Der Außendurchmesser der Stopfen-Passfläche entspricht in etwa dem Kerndurchmesser des Außengewindeabschnitts. Auf diese Weise wird ein unzweckmäßig großer Durchmessersprung im Kanal vermieden.

Vorzugsweise ist der Außendurchmesser der Stopfen-Passfläche sogar geringfügig kleiner als der Kerndurchmesser des Außengewindeabschnitts, und ist gegebenenfalls zwischen dem Außengewindeabschnitt und der Stopfen-Passfläche am Stopfen eine Umfangsschulter vorgesehen. Der sich hierdurch ergebende Durchmessersprung ist vernachlässigbar. Die Umfangsschulter ist bearbeitungsseitig von Vorteil, um den Außengewindeabschnitt und die Stopfen-Passfläche jeweils sauber bearbeiten zu können. Außerdem kann die Umfangsschulter als Einschraubbegrenzung benutzt werden, die spürbar anzeigt, dass der Passsitz mit der Presspassung zwischen den Passflächen ordnungsgemäß hergestellt wurde.

Bei einer Ausführungsform, bei welcher im Presssitz die druckdichte Absperrung durch wenigstens einen Dichtring wie einen O-Ring unterstützt werden kann, kann der Stopfen eine durch eine umfängliche Dichtungsnut unterbrochene Stopfen-Passfläche aufweisen. Der Dichtring kann in der Dichtungsnut platziert werden, ehe der Stopfen montiert wird.

In einer Ausführungsform, in welcher im Kanal in dessen Verlauf im Gehäuse mehr als ein Stopfen montiert sind, hat ausgehend von der Kanalmündung jeder weiter innen montierte Stopfen einen kleineren Durchmesser als ein jeweils weiter außen montierter Stopfen. Da der Durchmessersprung zwischen der jeweiligen Stopfen-Passfläche und dem Außengewindeabschnitt vernachlässigbar klein ist, bleibt bei mehreren im Kanal montierten Stopfen der Innendurchmesser des Kanals an der außenliegenden Mündung zweckmäßig klein.

Hierbei kann es zweckmäßig sein, wenn der Durchmesser der Stopfen-Passfläche eines jeweils weiter außen montierten Stopfens und/oder der Innendurchmesser der diese Stopfen-Passfläche enthaltenden Passfläche im Kanal gerade so gewählt wird, dass er mindestens dem Außengewindeabschnitts-Außendurchmesser des nächsten, weiter innen im Kanal montierten Stopfens entspricht. Der Durchmesserunterschied ist zweckmäßig so klein, dass beim Einführen des weiter innen zu montierenden Stopfens dessen Außengewindeabschnitt keine Passfläche im Kanal verletzt, sondern beispielsweise der Stopfen mit einer leichten Gleitpassung einschiebbar ist.

Zweckmäßig sind das Gehäuse der hydraulischen Vorrichtung wie auch der Stopfen aus Stahl hergestellt, vorzugsweise aus Werkzeugstahl.

Anhand der Zeichnungen werden Ausführungsformen des Erfindungsgegenstandes erläutert. Es zeigen:
- Fig. 1: einen Schnitt eines Gehäuses einer hydraulischen Vorrichtung mit zwei hintereinander in einem Kanal montierten Stopfen,
- Fig. 2: eine Ansicht eines Gehäuses ähnlich dem von Fig. 1, mit einem einzigen im Inneren des Kanals montierten Stopfen, und
- Fig. 3: eine Schnittansicht eines Gehäuses ähnlich dem von Fig. 1, mit einem in der Mündung eines Kanals montierten Stopfen.

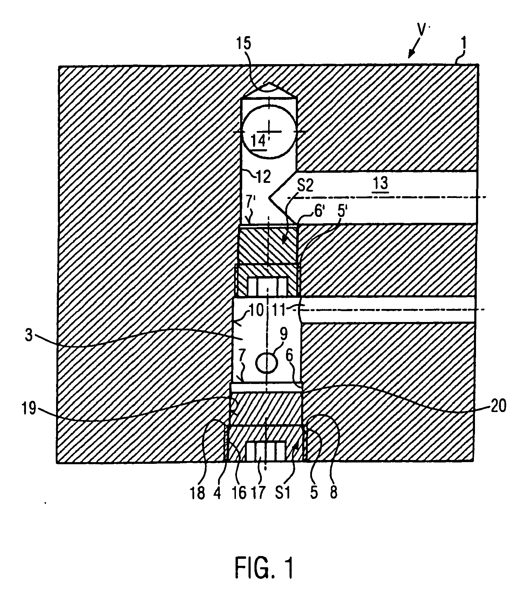

Fig. 1 verdeutlicht im Schnitt ein blockförmiges Gehäuse 1 einer hydraulischen Vorrichtung V, die beispielsweise ein Schieber- oder Sitzventil oder ein Zylinder oder dgl. sein kann. Das Gehäuse 1 besteht beispielsweise aus Stahl, vorzugsweise Werkzeugstahl, und enthält einen von einer an einer Gehäuseaußenseite 2 platzierten Kanalmündung 4 ausgehenden, beispielsweise gebohrten Kanal 3 (Stufen-Sackbohrung), dessen Zweck eine Strömungsleitfunktion für im Gehäuse 1 vorgesehenen Strömungswegen 9, 11, 13 oder eine Anzapfung eines Hohlraumes 14, beispielsweise einer Schieberbohrung, ist. In der in Fig. 1 gezeigten Ausführungsform sind im Kanal 3 in dessen Verlauf hintereinander zwei Stopfen S1, S2 montiert, die jeweils den Kanal 3 druckdicht absperren. Der weiter innenliegende Stopfen S2 hat einen kleineren Durchmesser als der außenliegende Stopfen S1 in der Kanalmündung 4.

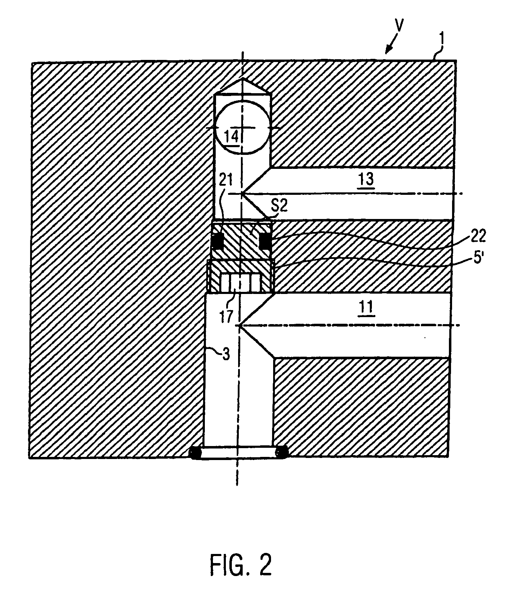

Jeder Stopfen S1 ist so eingeschraubt, dass er auch einen Presssitz herstellt. Der Presssitz hat zumindest die Aufgabe, ein selbsttätiges Verdrehen des eingeschraubten Stopfens S1, S2 zu verhindern, und kann ferner entweder direkt die druckdichte Absperrung bewirken (in Fig. 1) oder indirekt durch eine Dichtung 22 (Fig. 2) unterstützt werden.

Für den außenliegenden Stopfen S1 in Fig. 1 ist im Kanal ein Innengewindeabschnitt 5 geformt, an den sich eine zylindrische Passfläche 6 anschließt, die an einer Umfangsschulter 7 (Option) endet. Anschließend an die Umfangsschulter 7 bildet der Kanal 3 einen Abschnitt 10, in welchem beispielsweise die beiden Strömungswege 9, 11 münden. Anschließend an den Abschnitt 10 ist ein weiterer Innengewindeabschnitt 5' und anschließend an diesen eine weitere zylindrische Passfläche 6' für den weiter innenliegend montierten zweiten Stopfen S2 geformt, wobei die Passfläche 6' an einer Umfangsschulter 7' (Option) endet. In den anschließenden Abschnitt 12 des Kanals 3 mündet ein weiterer Strömungsweg 13, ehe der Abschnitt 12 zur Anzapfung einen Hohlraum 14 schneidet und an einem Blindende 15 endet. Der Kanal 3 könnte auch das Gehäuse 1 vollständig durchsetzen, und würde dann an beiden Enden durch jeweils einen Stopfen verschlossen, falls nicht für die hydraulische Vorrichtung V hier ein Strömungsweg nach außen benötigt wird.

Der Stopfen S1 weist einen zum Innengewindeabschnitt 5 passenden Außengewindeabschnitt 16 auf, der (Option) an einer Umfangsschulter 18 endet. Dort schließt sich eine zylindrische (oder leicht konische) Stopfen-Passfläche 19 an, die am Frontende des Stopfens S1 durch eine konische oder gerundete Phase 20 verjüngt sein kann.

Die Länge der Stopfen-Passfläche 19 entspricht annähernd der axialen Länge des Außengewindeabschnitts 16, oder kann sogar länger oder auch kürzer als diese sein. Die Passfläche 6 im Kanal 3 ist zweckmäßig länger als die Stopfen-Passfläche 19. Der Außendurchmesser der Stopfen-Passfläche 19 entspricht zweckmäßig in etwa dem Kerndurchmesser des Außengewindeabschnitts 16, oder ist geringfügig kleiner (Umfangsschulter 18 zur einfacheren Bearbeitung) als dieser. Im Hinterende des Stopfens S1 (analog auch im Stopfen S2) ist eine Drehhandhabe 17 geformt, zweckmäßig eine vertiefte Drehhandhabe mit gegenüber der Kanalweite kleinerem Durchmesser, beispielsweise ein Innensechskant. Mittels der Drehhandhabe lässt sich der Stopfen S1 bzw. S2 montieren, und gegebenenfalls auch demontieren.

Der außenliegende Stopfen S1 verbindet über den Abschnitt 10 die Strömungswege 9 und 11, während der innenliegende Stopfen S2 den Abschnitt 10 vom Abschnitt 12 trennt, und im Abschnitt 12 den Hohlraum 14 mit dem Strömungsweg 13 verbindet.

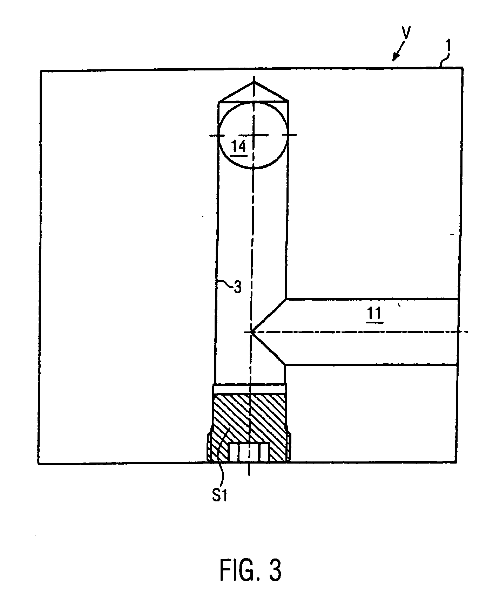

Im Verlauf des Kanals 3 können auch mehr als zwei Stopfen S1, S2 mit unterschiedlichen Durchmessern montiert sein, oder auch nur ein Stopfen innenliegend, wie in Fig. 2 oder nur ein Stopfen außenliegend, wie in Fig. 3. Geht der Kanal 3 durch das Gehäuse 1 durch, dann können von beiden Gehäuseseiten aus mehrere Stopfen mit einwärts abnehmenden Durchmessern montiert sein.

In dem Gehäuse 1 in Fig. 2 wird der den eingeschraubten Stopfen S2 festlegende Presssitz bei der druckdichten Absperrung unterstützt durch eine Dichtung 22, wie einen O-Ring, die in die umfängliche Dichtungsnut 21 eingeknüpft ist. Die Dichtungsnut 21 unterteilt entweder die Stopfen-Passfläche 19, oder der Stopfen S2 ist mit zwei axial durch die Dichtungsnut 21 separierten Stopfen-Passflächen ausgebildet.

In dem Gehäuse 1 in Fig. 3 ist nur der außenliegende Stopfen S1 entsprechend dem Stopfen S1 von Fig. 1 montiert. In diesem Fall sind, falls in dem Abschnitt 12 und dem Abschnitt 10 des Kanals 3 nur ein bestimmter Durchmesser benötigt wird, der Innengewindeabschnitt 5 wie auch die Passfläche 6 entsprechend klein ausgebildet, um beispielsweise den kleineren Stopfen S2 von Fig. 1 aufzunehmen.

Bei der Montage des Stopfens S1, S2 kann zum Herstellen des Presssitzes gegebenenfalls ein Schmierstoff verwendet werden. Die Gewinde in den Gewindeabschnitten 5, 5' und 16 können Normgewinde oder Feingewinde sein.

Der Hauptzweck des durch das Einschrauben des jeweiligen Stopfens S1, S2 gebildeten Presssitzes ist die Verdrehsicherung des montierten Stopfens. Zusätzlich kann der Presssitz dazu verwendet werden, alleine für die druckdichte Absperrung zu sorgen, oder gemäß Fig. 2 zum Unterbringen wenigstens einer Dichtung 22, die flankierend für die notwendige Druckdichtheit sorgt.

## Patentansprüche

1. Hydraulische Vorrichtung (V) mit einem Gehäuse (1), in welchem in wenigstens einem an zumindest einer Gehäuseseite (2) mündenden Kanal (3) von außen ein den Kanal (3) druckdicht absperrender Stopfen (S1, S2) in dem Kanal (3) eingeschraubt ist, wobei der Kanal (3) einen
Innengewindeabschnitt (5, 5') und eine umfängliche zylindrische Passfläche, (6, 6') und der Stopfen (S1, S2) einen Außengewindeabschnitt (16) und wenigstens eine in Einschraubrichtung des Stopfens (S1, S2) von der Mündung (4) des Kanals (3) an der der Mündung (4) abgewandten Seite des Außengewindeabschnitts (16) angeordnete umfängliche zylindrische Passfläche (19) aufweisen und zwischen dem Stopfen (S1, S2) und dem Kanal (3) über die Anzugsspannung des eingeschraubten Stopfens (S1, S2) ein umfänglicher Presssitz gebildet ist, der den Kanal (3) druckdicht absperrt, **dadurch gekennzeichnet, dass** in Achsrichtung des Stopfens (S1, S2) die Stopfen-Passfläche (19) länger ist als der Außengewindeabschnitt (16) des Stopfens und die Kanal-Passfläche (6, 6') axial länger ist als die Stopfen-Passfläche (19),
und dass der in den Kanal (3) in dessen Innengewindeabschnitt (5, 5') eingeschraubte Stopfen (S1,
S2) unter der Anzugsspannung mit der wenigstens einen zylindrischen Stopfen-Passfläche (19) einen umfänglichen Presssitz mit der zylindrischen Kanal-Passfläche (6, 6') bildet, und der umfängliche Presssitz zwischen den zylindrischen Passflächen (19, 6, 6') den Stopfen (S1, S2) gegen Verdrehen im Kanal (3) festlegt, und dass der Außendurchmesser der zylindrischen Stopfen-Passfläche (19) in etwa dem Kerndurchmesser des Außengewindeabschnittes (16) des Stopfens (S1, S2) entspricht.

2. Hydraulische Vorrichtung nach Anspruch 1, **dadurch gekennzeichnet, dass** der Außendurchmesser der zylindrischen Stopfen-Passfläche (19) geringfügig kleiner ist als der Kerndurchmesser des Außengewindeabschnitts (16) des Stopfens (S1, S2).

3. Hydraulische Vorrichtung nach Anspruch 1, **dadurch gekennzeichnet, dass** der umfängliche Presssitz zwischen den zylindrischen Passflächen (19, 6, 6') den Kanal (3) druckdicht absperrt.

4. Hydraulische Vorrichtung nach Anspruch 1, **dadurch gekennzeichnet, dass** die zylindrische Stopfen-Passfläche (19) für eine assistierende Abdichtung des Kanals durch wenigstens einen Dichtring (22) durch eine umfängliche Dichtungsnut (21) für den Dichtring (22) unterbrochen ist.

5. Hydraulische Vorrichtung nach wenigstens einem der vorhergehenden Ansprüche, **dadurch gekennzeichnet, dass** im Kanal (3) in dessen Verlauf im Gehäuse (1) mehrere Stopfen (S1, S2) eingeschraubt sind, und dass ausgehend von der Kanalmündung (4) ein weiter innen montierter Stopfen (S2) einen kleineren Durchmesser aufweist, als ein jeweils weiter außen montierter Stopfen (S1).

6. Hydraulische Vorrichtung nach Anspruch 5, **dadurch gekennzeichnet, dass** der Durchmesser der zylindrischen Stopfen-Passfläche (19) eines jeweils weiter außen montierten Stopfens (S1) und/oder der Innendurchmesser der zylindrischen Kanal-Passfläche (6) mindestens dem Außengewindeabschnitts-Außendurchmesser des nächsten, weiter innen im Kanal (3) montierten Stopfens (S2) entspricht, vorzugsweise so gewählt ist, dass der Stopfen (S2) mit dem kleineren Durchmesser mit seinem Außengewindeabschnitt allenfalls mit einer leichten Gleitpassung durch die zylindrische Kanal-Passfläche (6) einschiebbar ist.

7. Hydraulische Vorrichtung nach wenigstens einem der vorhergehenden Ansprüche, **dadurch gekennzeichnet, dass** das Gehäuse (1) und der Stopfen (S1, S2) aus Stahl, vorzugsweise Werkzeugstahl, bestehen.

## Claims

1. Hydraulic device (V) comprising a housing (1) having at least one channel (3) which is open towards at least one outer housing side (2), and a plug (S1, S2) screwed from the exterior into the channel (3) in pressure-tight fashion, the channel (3) having an interior thread section (5, 5') and a circumferential cylindrical fitting surface (6, 6'), the plug (S1, S2) having an exterior thread section (16) and at least one circumferential cylindrical fitting surface (19) arranged in screw-in direction of the plug (S1, S2) from the opening (4) of the channel (3) at the side of the exterior thread section (16) remote from the opening (4), a circumferential pressure seat being formed by the tightening strength of the screwed-in plug (S1, S2) between the plug (S1, S2) and the channel (3), which pressing seat is blocking the channel (3) in pressure-tight fashion, **characterised in that** in axial direction of the plug (S1, S2) the plug fitting surface (19) is longer than the exterior thread section (16) of the plug, that the channel fitting surface (6, 6') is axially longer than the plug fitting surface (19), and that the plug (S1, S2) screwed into the interior thread section (5, 5') of the channel (3) is forming a circumferential pressing seat with the cylindrical channel fitting surface (6, 6') by the tightening strength, which circumferential pressing seat between the cylindrical fitting surface (19, 6, 6') is securing the plug (S1, S2) against rotation in the channel (3), and that the outer diameter of the cylindrical plug fitting surface (19) corresponds to about the core diameter of the exterior thread section (16) of the plug (S1, S2).

2. Hydraulic device according to claim 1, **characterised in that** the outer diameter of the cylindrical plug fitting surface (19) is somewhat smaller than the core diameter of the exterior thread section (16) of the plug (S1, S2).

3. Hydraulic device according to claim 1, **characterised in that** the circumferential pressing seat between the cylindrical fitting surfaces (19, 6, 6') is blocking the channel (3) in pressure-tight fashion.

4. Hydraulic device according to claim 1, **characterised in that** for an assisting sealing of the channel the cylindrical plug fitting surface (19) is interrupted by a circumferential sealing groove (21) for a sealing ring (22) accommodated in the sealing groove (21).

5. Hydraulic device according to at least one of the preceding claims, **characterised in that** in the course of the channel (3) and along the channel (3) several plugs (S1, S2) are screwed in, and that, starting from the opening (4) of the channel (3) a plug (S2) mounted further in the interior has a smaller diameter than a respective plug (S1) mounted further to the outer side.

6. Hydraulic device according to claim 5, **characterised in that** the diameter of the cylindrical plug fitting surface (19) of a plug (S1) mounted respectively further to the outer side and/or the inner diameter of the cylindrical channel fitting surface (6) at least corresponds with the exterior thread section outer diameter of the next following plug (S2) mounted further to the inside in the channel (3), preferably is chosen so that the plug (S2) having the smaller diameter can be pushed with its exterior thread section at most with a light sliding tolerance through the outer cylindrical channel fitting surface (6).

7. Hydraulic device according to at least one of the preceding claims, **characterised in that** the housing (1) and the plug (S1, S2) are made from steel, preferably tool steel.

## Revendications

1. Dispositif hydraulique (V) comprenant un boîtier (1) dans lequel, dans au moins un canal (3) qui débouche sur au moins un côté du boîtier (2), est vissé dans ledit canal (3) depuis l'extérieur un bouchon (S1, S2) d'obturation du canal (3) étanche à la pression, dans lequel le canal (3) comporte une section à filetage interne (5, 5') et une large surface de contact cylindrique (6, 6'), et le bouchon (S1, S2) comporte une section à filetage externe (16) et au moins une large surface de contact cylindrique (19) agencée en direction de vissage du bouchon (S1, S2) de l'embouchure (4) du canal (3) sur le côté opposé à l'embouchure (4) de la section à filetage externe (16), et un large siège de compression est formé entre le bouchon (S1, S2) et le canal (3) par la tension de serrage du bouchon vissé (S1, S2), qui obture le canal (3) de manière étanche à la pression, **caractérisé en ce que** la surface de contact du bouchon (19) est plus longue en direction axiale du bouchon (S1, S2) que la section à filetage externe (16) du bouchon, et la surface de contact du canal (6, 6') est axialement plus longue que la surface de contact du bouchon (19), **en ce que** le bouchon (S1, S2) vissé dans la section à filetage interne (5, 5') du canal (3) constitue sous la tension de serrage avec l'au moins une surface de contact du bouchon cylindrique (19) un large siège de compression avec la surface de contact de canal cylindrique (6, 6'), et le large siège de compression entre les surfaces de contact cylindriques (19, 6, 6') empêche une rotation du bouchon (S1, S2) dans le canal (3), et **en ce que** le diamètre externe de la surface de contact cylindrique du bouchon (19) correspond environ au diamètre du noyau de la section à filetage externe (16) du bouchon (S1, S2).

2. Dispositif hydraulique selon la revendication 1, **caractérisé en ce que** le diamètre externe de la surface de contact cylindrique du bouchon (19) est légèrement inférieur au diamètre du noyau de la section à filetage externe (16) du bouchon (S1, S2).

3. Dispositif hydraulique selon la revendication 1, **caractérisé en ce que** le large siège de compression entre les surfaces de contact cylindriques (19, 6, 6') obture le canal (3) de manière étanche à la pression.

4. Dispositif hydraulique selon la revendication 1, **caractérisé en ce que** la surface de contact cylindrique du bouchon (19) est interrompue pour une étanchéité auxiliaire du canal par au moins un anneau d'étanchéité (22) à l'aide d'une large rainure d'étanchéité (21) pour l'anneau d'étanchéité (22).

5. Dispositif hydraulique selon au moins l'une des revendications précédentes, **caractérisé en ce que** plusieurs bouchons (S1, S2) sont vissés sur le parcours du canal (3) dans le boîtier (1) et **en ce que**, en fonction de l'embouchure du canal (4), un autre bouchon (S2) monté à l'intérieur présente un diamètre inférieur à celui d'un autre bouchon respectif (S1) monté à l'extérieur.

6. Dispositif hydraulique selon la revendication 5, **caractérisé en ce que** le diamètre de la surface de contact cylindrique de bouchon (19) d'un autre bouchon (S1) respectif monté à l'extérieur et/ou le diamètre interne de la surface de contact cylindrique du canal (6) correspondent au moins au diamètre externe d'une section à filetage externe d'un autre bouchon (S2) suivant monté dans le canal (3), préférablement choisi de telle sorte que le bouchon (S2) avec le plus petit diamètre peut si nécessaire être glissé sur sa section à filetage externe avec un ajustement glissant facile à travers la surface de contact cylindrique du canal (6).

7. Dispositif hydraulique selon au moins l'une des revendications précédentes, **caractérisé en ce que** le boîtier (1) et le bouchon (S1, S2) sont constitués en acier, préférablement en acier à outils.
